# EUROPEAN PATENT SPECIFICATION

(11) **EP 0 954 184 B1**
(45) Date of publication and mention of the grant of the patent: **26.10.2005**
(21) Application number: 98201365.8
(22) Date of filing: 18.05.1998
(51) Int. Cl.: H04N 9/79

(54) **Television system discrimination apparatus**
Fernsehsystem-Unterscheidungsvorrichtung
Appareil pour discriminer le système de télévision

(30) Priority: 27.04.1998 JP 11655598
(43) Date of publication of application: 03.11.1999
(73) Proprietor: MATSUSHITA ELECTRIC INDUSTRIAL CO., LTD., Kadoma-shi, Osaka 571-8501 (JP)
(72) Inventor: Uchiyama, Shin-ichi, Osaka 573-0092 (JP); Moll, Holger, 5656 AA Eindhoven (NL)
(74) Representative: Eisenführ, Speiser & Partner

(56) References cited:
- EP-A- 0 311 442
- EP-A- 0 669 770
- US-A- 4 724 476

## Description

### BACKGROUND OF THE INVENTION

### 1. FIELD OF THE INVENTION

The present invention relates to a television system judgment apparatus provided in a recording circuit of a video tape recorder (referred to as a VTR hereinafter), and in particular, to a television system judgment apparatus for automatically judging whether a sub-carrier frequency of a chrominance sub-carrier signal is substantially 3.58 MHz or 4.43 MHz in the recording circuit of the VTR.

### 2. DESCRIPTION OF THE PRIOR ART

In recent years, there has been developed and put on the market a multi-system VTR which can cope with not only a video signal of the PAL system but also a video signal of the NTSC system in the Asian region and the European region. Furthermore, such a multi-system VTR is provided with a system judgment circuit for automatically judging the television system of a video signal. A recording circuit of a VTR provided with a prior art system judgment circuit will be described hereinafter.

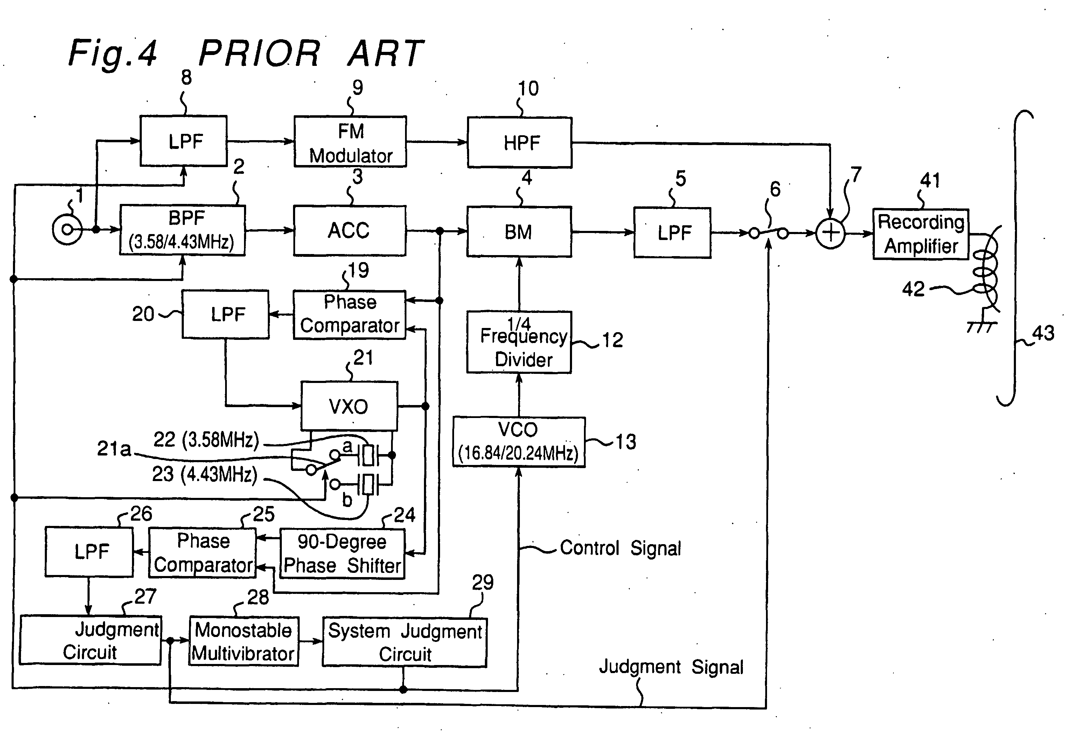

Fig. 4 is a block diagram of the recording circuit of the VTR provided with the prior art system judgment circuit 29 disclosed in the Japanese Patent Laid-Open Publication No. JP-A-8-140108. In particular, in the Asian region there exists a video signal of the NTSC system including a chrominance sub-carrier signal having a sub-carrier frequency of about 3.58 MHz or about 4.43 MHz. The recording circuit shown in Fig. 4 is characterized in that the recording circuit comprises a system judgment circuit 29 for judging whether the sub-carrier frequency of the chrominance sub-carrier signal included in an inputted video signal is about 3.58 MHz or about 4.43 MHz.

In Fig. 4 are shown an input terminal 1, a band-pass filter (referred to as a BPF hereinafter) 2, an automatic color signal control circuit (referred to as an ACC hereinafter) 3, a balanced modulator (referred to as a BM hereinafter) 4, a low-pass filter (referred to as an LPF hereinafter) 5, a switch 6, an adder 7, an LPF 8, an FM modulator 9, a high-pass filter (referred to as an HPF hereinafter) 10, a 1/4 frequency divider 12, a voltage controlled type oscillator (referred to as a VCO hereinafter) 13, a phase comparator 19, an LPF 20, a voltage controlled type variable crystal oscillator (referred to as a VXO hereinafter) 21, crystal resonators 22 and 23, a 90-degree phase shifter 24, a phase comparator 25, an LPF 26, a killer judgment circuit 27, a monostable multivibrator 28, a system judgment circuit 29, a recording amplifier 41, a recording head 42, and a magnetic tape 43.

Referring to Fig. 4, a composite video signal including a luminance signal and a chrominance sub-carrier signal is inputted via the input terminal 1 to the BPF 2 and the LPF 8. The BPF 2 has the center frequency of its pass-band which can be switched between 3.58 MHz and 4.43 MHz according to a control signal representing a result of judgment of the system judgment circuit 29, and operates to band-pass-filter the chrominance sub-carrier signal from the composite video signal inputted via the input terminal 1, and thereafter, output the resulting chrominance sub-carrier signal to the ACC 3. The ACC 3 controls the inputted chrominance sub-carrier signal to make the amplitude of the color burst signal of the inputted chrominance sub-carrier signal constant, and then, outputs the chrominance sub-carrier signal obtained after this control to the BM 4. The BM 4 executes balanced modulation for the inputted chrominance sub-carrier signal by means of a local oscillation signal from the 1/4 frequency divider 12 to frequency-convert the inputted chrominance sub-carrier signal into a down frequency-converted chrominance signal, and then, outputs the down frequency-converted chrominance signal obtained through the frequency conversion to the adder 7 via the LPF 5 which removes unnecessary frequency components generated in the frequency conversion stage and the switch 6. In this case, a combination of the BM 4 and the LPF 5 constitute a frequency converter circuit for frequency-converting the chrominance sub-carrier signal into the down frequency-converted chrominance signal.

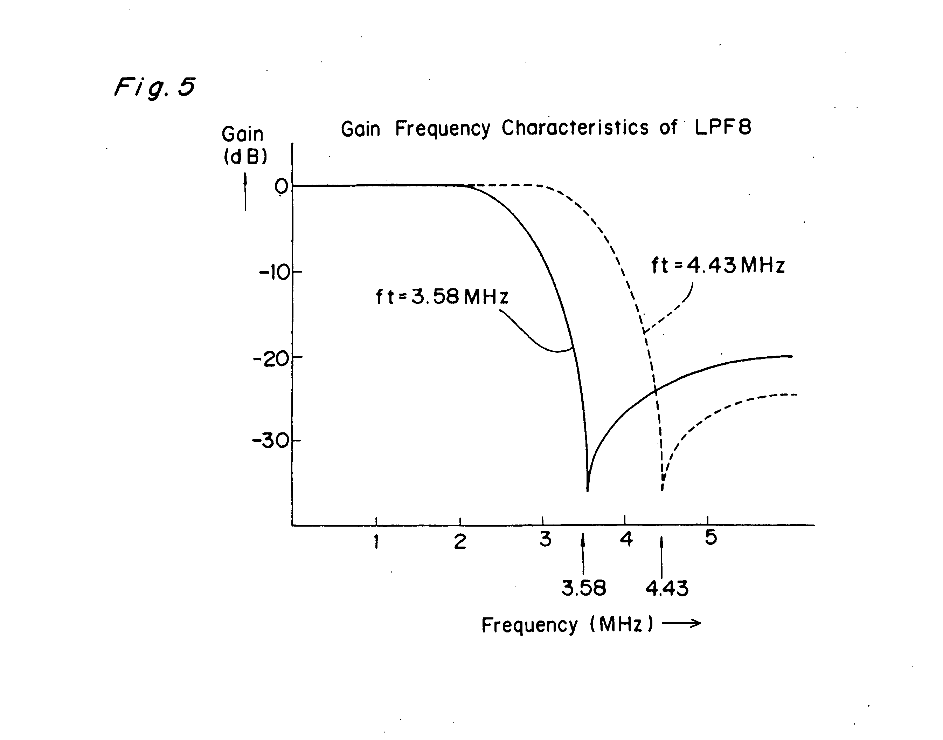

On the other hand, the LPF 8 removes the chrominance sub-carrier signal from the inputted composite video signal so as to low-pass filter only the luminance signal, and then, outputs the luminance signal obtained after the filtering to the FM modulator 9. Therefore, as shown in Fig. 5, the gain frequency characteristics of the LPF 8 is changed so that the trap frequency ft thereof is switched over between 3.58 MHz and 4.43 MHz according to the control signal representing the result of judgment of the system judgment circuit 29. The FM modulator 9 frequency-modulates a predetermined carrier wave signal according to the inputted luminance signal, and then, outputs the frequency-modulated luminance signal to the adder 7 via the HPF 10 which removes the unnecessary frequency components in the lower frequency region. The adder 7 adds the inputted frequency-modulated luminance signal to the down frequency-converted chrominance signal, and then, outputs the recording signal as the result of addition to the recording head 42 via the recording amplifier 41, to record the recording signal onto the magnetic tape 43.

The VCO 13 has the center frequency of its oscillation signal which can be switched over between 16.84 MHz and 20.24 MHz. According to the control signal representing the result of judgment of the system judgment circuit 29, the center frequency is set to 16.84 MHz when the sub-carrier frequency of the chrominance sub-carrier signal is about 3.58 MHz, while the center frequency is set to 20.24 MHz when the sub-carrier frequency of the chrominance sub-carrier signal is 4.43 MHz. The oscillation signal having the set center frequency is outputted to the BM 4 via the 1/4 frequency divider 12 as a local oscillation signal which serves as the carrier wave signal of the down frequency-converted chrominance signal. In this case, the carrier wave frequency of the down frequency-converted chrominance signal becomes about 4.21 MHz when the sub-carrier frequency of the chrominance sub-carrier signal is about 3.58 MHz, while the carrier wave frequency of the down frequency-converted chrominance signal becomes 5.06 MHz when the sub-carrier frequency of the chrominance sub-carrier signal is 4.43 MHz.

To the VXO 21 via a switch 21a is connected the crystal resonator 22 having an oscillation frequency of about 3.58 MHz and the crystal resonator 23 having an oscillation frequency of about 4.43 MHz, and an oscillator circuit is formed with such a construction that either one of the two crystal resonators 22 and 23 is selectively connected via the switch 21a to the VXO 21 according to the control signal representing the result of judgment of the system judgment circuit 29. The VXO 21 generates an oscillation signal having an oscillation frequency of about 3.58 MHz or about 4.43 MHz, and then, outputs the generated oscillation signal to the phase comparators 19 and 25. The phase comparator 19 compares the phase of the oscillation signal from the VXO 21 with the phase of a color burst signal of the chrominance sub-carrier signal from the ACC 3, and then, outputs the resulting phase error signal to the VXO 21 via the LPF 20 for executing the smoothing process of the phase error signal, to control the oscillation frequency and phase of the oscillation signal outputted by the VXO 21. With this arrangement, the phase of the oscillation signal outputted by the VXO 21 is synchronized with the phase of the color burst signal of the chrominance sub-carrier signal outputted from the ACC 3.

Then, the phase of the oscillation signal outputted by the VXO 21 is shifted by 90 degrees by the 90-degree phase shifter 24, and thereafter, the resulting phase-shifted oscillation signal is inputted to the phase comparator 25. The phase comparator 25 compares the phase of the signal from the 90-degree phase shifter 24 with the phase of the color burst signal of the chrominance sub-carrier signal from the ACC 3, and then, outputs the resulting phase error signal to the killed state judgment circuit 27 via the LPF 26 for executing the smoothing process for the signal. The killed state judgment circuit 27 judges about the presence or absence of the chrominance sub-carrier signal and about the phase synchronization of the color burst signal with the oscillation signal of the VXO 21 based on an output voltage from the LPF 26. In a state where there is no chrominance sub-carrier signal and the phase synchronization of the color burst signal with the oscillation signal of the VXO 21 is not established (this state is referred to as a killed state hereinafter), the killed state judgment circuit 27 controls the switch 6 to be turned off by outputting an L-level judgment signal to a control terminal of the switch 6. By this operation, only the frequency-modulated luminance signal is outputted from the adder 7 to the recording head 42 via the recording amplifier 41 in the killed state, so that the recording signal including only the frequency-modulated luminance signal is recorded on the magnetic tape 43. Further, the L-level judgment signal from the killed state judgment circuit 27 is outputted to the monostable multivibrator 28, and then the monostable multivibrator 28 inverts its output signal every two seconds, and then, outputs the output signal to the system judgment circuit 29.

Subsequently, when the killed state shifts into a non-killed state (referred to as a color state hereinafter), the monostable multivibrator 28 maintains its output polarity at this timing. The system judgment circuit 29 judges whether the sub-carrier frequency of the chrominance sub-carrier signal included in the composite video signal inputted to the input terminal 1 is about 3.58 MHz or about 4.43 MHz based on the polarity of the output signal from the monostable multivibrator 28. The judgment circuit 29 outputs a control signal representing the result of judgment to the LPF 8 and the BPF 2, and controls the switch 21a of the VXO 21 and the VCO 13. In this case, the system judgment circuit 29 outputs a High level (referred to as an H-level hereinafter) control signal upon judging that the sub-carrier frequency is about 3.58 MHz, and controls the followings:
(a) to switch the trap frequency ft of the LPF 8 to 3.58 MHz;
(b) to switch the center frequency of the pass-band of the BPF 2 to 3.58 MHz;
(c) to switch the switch 21a of the VXO 21 to its a-side so as to connect the crystal resonator 22 having the oscillation frequency of 3.58 MHz to the VXO 21; and
(d) to switch the oscillation center frequency of the VCO 13 to 16.84 MHz.

On the other hand, the system judgment circuit 29 outputs a Low level (referred to as an L-level hereinafter) control signal upon judging that the sub-carrier frequency is about 4.43 MHz, and controls the followings:
(a) to switch the trap frequency ft of the LPF 8 to 4.43 MHz;
(b) to switch the center frequency of the pass-band of the BPF 2 to 4.43 MHz;
(c) switch the switch 21a of the VXO 21 to its b-side so as to connect the crystal resonator 23 having the oscillation frequency of 4.43 MHz to the VXO 21; and
(d) switch the oscillation center frequency of the VCO 13 to 20.24 MHz.

In the recording circuit of the prior art VTR constructed as above, the phase of the color burst signal of the chrominance sub-carrier signal is synchronized with the phase of the oscillation signal generated by the VXO 21 when the sub-carrier frequency of the chrominance sub-carrier signal included in the inputted composite video signal coincides with the result of judgment of the system judgment circuit 29, while the phase of the color burst signal of the chrominance sub-carrier signal is not synchronized with the phase of the oscillation signal generated by the VXO 21 when the sub-carrier frequency of the chrominance sub-carrier signal does not coincide with the result of judgment of the system judgment circuit 29. Taking advantage of the above fact, the monostable multivibrator 28 maintains the result at the timing of the phase synchronization, to allow the system judgment circuit 29 to judge whether the sub-carrier frequency of the chrominance sub-carrier signal is about 3.58 MHz or about 4.43 MHz.

However, in the case of a timer recording for starting the recording process upon turning on the power or in a similar case, the recording circuit of the aforementioned prior art VTR has had such a problem that the switch 6 is turned off for two seconds when the sub-carrier frequency of the chrominance sub-carrier signal does not coincide with the result of judgment of the system judgment circuit 29, and this causes no recording of the down frequency-converted chrominance signal on the magnetic tape 43 (this problem is referred to as a first problem hereinafter).

Furthermore, in the recording circuit of the VTR shown in Fig. 4, the killed state judgment circuit 27 maintains the killed state when a monochrome signal is inputted via the input terminal 1. Therefore, the control signal from the system judgment circuit 29 repeats every two seconds the operation of alternately outputting the control signals of the two levels representing the results of judgment of 3.58 MHz and 4.43 MHz, respectively. In this stage, since the switch 6 is turned off, the down frequency-converted chrominance signal is not outputted to the recording head 42, so that the alternate outputting of the aforementioned control signals of two levels occurring repetitively every two seconds does not influence the down frequency-converted chrominance signal. On the other hand, since the gain frequency characteristics of the LPF 8 are switched over as shown in Fig. 5, the pass-band of the luminance signal is changed every two seconds. This causes a problem that, when the recorded signal is reproduced, the user may see a picture displayed on a display as if screens were switched over every two seconds, and this offends the user's sensation (this problem is referred to as a second problem hereinafter).

### SUMMARY OF THE INVENTION

The first object of the present invention is therefore to provide a television system judgment apparatus, capable of solving the aforementioned first problem by immediately judging whether the sub-carrier frequency of the chrominance sub-carrier signal included in the inputted composite video signal is about 3.58 MHz or about 4.43 MHz even in the stage of turning on the power.

The second object of the present invention is to provide a television system judgment apparatus, capable of solving the aforementioned second problem by preventing the offense to the user's sensation due to such a phenomenon that a picture displayed on a display can be seen as if screens were switched over every two seconds.

In order to achieve the aforementioned objective, according to one aspect of the present invention, there is provided a television system judgment apparatus comprising:
first low-pass filtering means for low-pass filtering a luminance signal from an inputted composite video signal, and for outputting a resulting luminance signal;
modulating means for frequency-modulating a predetermined carrier wave signal according to the luminance signal outputted from said first low-pass filtering means, and for outputting a frequency-modulated luminance signal obtained after the modulation;
band-pass filtering means for band-pass-filtering a chrominance sub-carrier signal from said inputted composite video signal, and outputting a resulting chrominance sub-carrier signal;
frequency converting means for frequency-converting the chrominance sub-carrier signal outputted from said band-pass filtering means into a down frequency-converted chrominance signal having a predetermined sub-carrier frequency, and for outputting a resulting down frequency- converted chrominance signal;
recording means for recording a recording signal including the frequency-modulated luminance signal outputted from said modulating means and the down frequency-converted chrominance signal outputted from said frequency converting means;
means for judging whether or not the chrominance sub-carrier signal outputted from said band-pass filtering means is in a killed state, and switch means for controlling the down frequency-converted chrominance signal not to be outputted from said frequency converting means to said recording means when it is judged that the chrominance sub-carrier signal outputted from said band-pass filtering means is in the killed state,
wherein said television system judgment apparatus is provided in a recording circuit of a video tape recorder for recording said recording signal,
characterized in that said television system judgment apparatus further comprises:
a tank circuit receiving at an input thereof the signal outputted from said frequency converting means and comprising a resonance circuit having a resonance frequency which is set by selectively switching over between a first resonance frequency higher than the sub-carrier frequency of said down frequency-converted chrominance signal and a second resonance frequency lower than the sub-carrier frequency of said down frequency-converted chrominance signal;
phase shifting means for shifting the phase of a signal outputted from said tank circuit by 90 degrees, and for outputting a resulting phase-shifted signal;
a phase comparator for comparing the phase of the down frequency-converted chrominance signal outputted from said frequency converting means with the phase of the signal outputted from said phase shifting means, and for outputting a resulting phase error signal;
second low-pass filtering means for smoothing the phase error signal outputted from said phase comparator through low-pass filtering, and for outputting a resulting smoothed signal; and
system judging means for judging whether the sub-carrier frequency of the chrominance sub-carrier signal included in said inputted composite video signal is substantially equal to 3.58 MHz or 4.43 MHz based on the smoothed signal outputted from said second low-pass filtering means.

The above-mentioned television system judgment apparatus preferably further comprises:
signal separating means for separating and extracting a horizontal synchronizing signal from the luminance signal outputted from said first low-pass filtering means; and
signal generating means for generating a pulse signal representing an interval of a color burst signal of the chrominance sub-carrier signal included in said inputted composite video signal based on the horizontal synchronizing signal separated by said signal separating means, and for outputting a resulting pulse signal to said phase comparator,
wherein said phase comparator executes the phase comparison only for an interval represented by said pulse signal.

In the above-mentioned television system judgment apparatus, in order to solve said second problem said second low-pass filtering means preferably comprises:
a resistor arranged to let a leak current flow therethrough so that the polarity of the signal outputted from said second low-pass filtering means is maintained at a predetermined polarity when no chrominance sub-carrier signal is included in the chrominance sub-carrier signal outputted from said band-pass filtering means.

According to the present invention, the time required for judging whether the sub-carrier frequency of the chrominance sub-carrier signal included in the inputted composite video signal is substantially 3.58 MHz or 4.43 MHz can be made shorter than that of the prior art, to allow the system judgment to be immediately made. Accordingly, the above-mentioned first problem can be solved.

According to a preferred embodiment of the present invention, the aforementioned phase comparator executes the phase comparison process only in the interval of the color burst signal of the chrominance sub-carrier signal included in the inputted composite video signal, and the aforementioned judging means can correctly judge whether the sub-carrier frequency of the chrominance sub-carrier signal included in the inputted composite video signal is substantially 3.58 MHz or 4.43 MHz based on the signal obtained by low-pass-filtering the phase error signal that is the result of phase comparison.

Accordingly, the aforementioned second problem is solved, and there can be prevented the possible occurrence of the offense to the user's sensation due to such a phenomenon that a picture can be seen as if screens were switched over every two seconds when the recorded signal is reproduced.

### BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:
Fig. 1 is a block diagram of a recording circuit of a VTR provided with a television system judgment circuit 50 according to a preferred embodiment of the present invention;
Fig. 2 is a graph showing frequency characteristics of a tank circuit 14 shown in Fig. 1;
Fig. 3 is a circuit diagram of an LPF 17 shown in Fig. 1;
Fig. 4 is a block diagram of a recording circuit of a VTR provided with a prior art system judgment circuit 29; and
Fig. 5 is a graph showing gain frequency characteristics of an LPF 8 shown in Fig. 4.

### DETAILED DESCRIPTION OF THE PREFERRED EMBODIMENTS

A preferred embodiment of the present invention will be described below with reference to the accompanying drawings.

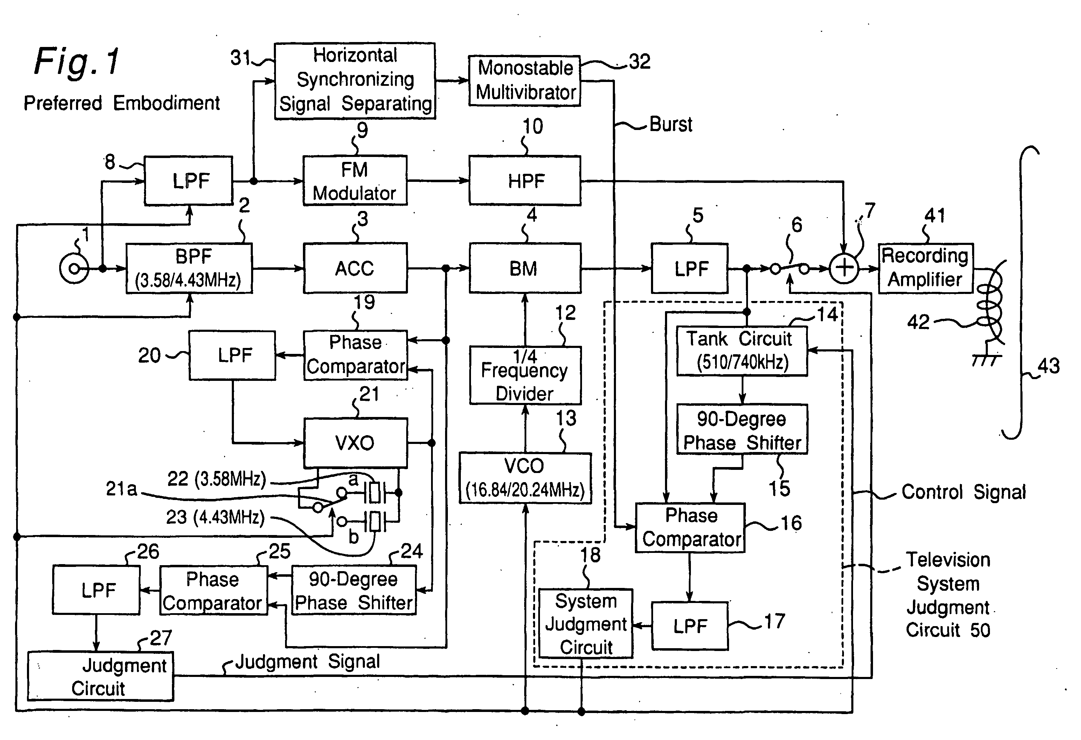

Fig. 1 is a block diagram of a recording circuit of a VTR provided with a television system judgment circuit 50 according to a preferred embodiment of the present invention. In Fig. 1, components similar to those of Fig. 4 are denoted by the same reference numerals. The recording circuit of the VTR of this preferred embodiment differs from the prior art shown in Fig. 4 in the following points.
(a) There is provided a television system judgment circuit 50 which is provided with neither the monostable multivibrator 28 nor the system judgment circuit 29, but provided with a tank circuit 14, a 90-degree phase shifter 15, a phase comparator 16, an LPF 17 and a system judgment circuit 18.
(b) A horizontal synchronizing signal separating circuit 31 and a monostable multivibrator 32 are provided for the purpose of detecting a burst timing pulse representing an interval of a color burst signal of the chrominance sub-carrier signal and outputting the detected burst timing pulse to the phase comparator 16.

The above points of difference will be described in detail below.

Referring to Fig. 1, the tank circuit 14 is constructed of, for example, a parallel resonance circuit comprised of an inductor and a capacitor, and by changing, for example, the capacitance value of the capacitor based on a control signal from the system judgment circuit 18, the resonance frequency of the parallel resonance circuit is changed. Concretely, in the tank circuit 14, the resonance frequency of the parallel resonance circuit is set to 510 kHz based on an H-level control signal from the system judgment circuit 18 in the case where the sub-carrier frequency of the chrominance sub-carrier signal is about 3.58 MHz, while the resonance frequency of the parallel resonance circuit is set to 740 kHz based on an L-level control signal from the system judgment circuit 18 in the case where the sub-carrier frequency of the chrominance sub-carrier signal is about 4.43 MHz.

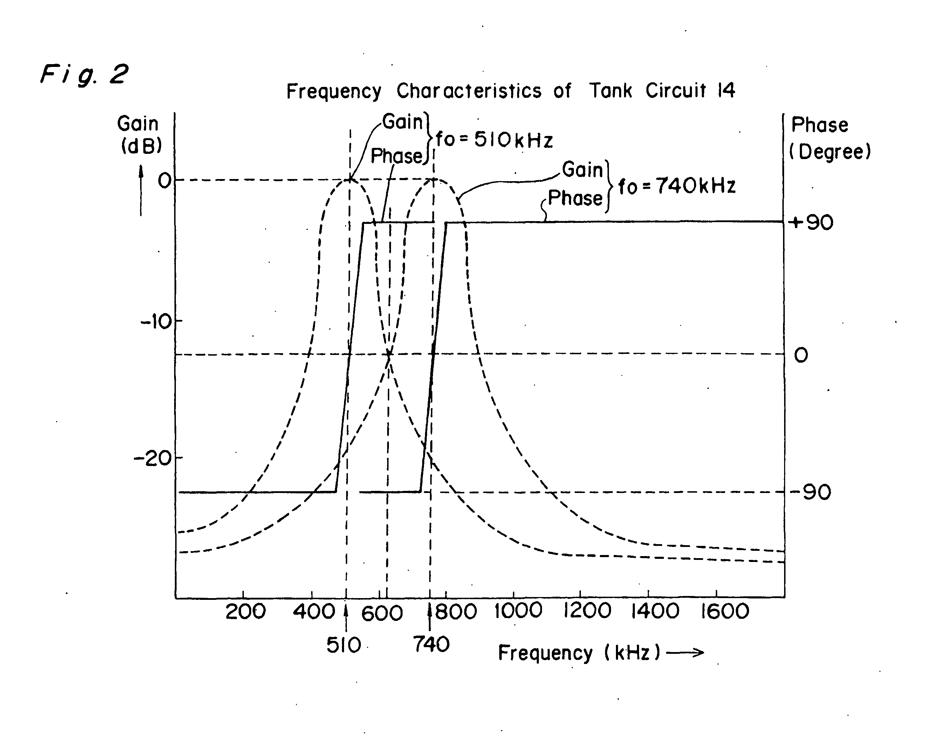

The gain frequency characteristics and the phase to frequency characteristics of the tank circuit 14 are shown in Fig. 2. As apparent from Fig. 2, it can be understood that the phase shifts from -90 degrees to +90 degrees at the resonance frequency of the tank circuit 14. Further, the 90-degree phase shifter 15 connected to the output terminal of the tank circuit 14 has a phase shifting characteristic of +90 degrees in the band up to at least 1.8 MHz shown in Fig. 2, shifts an output signal from the tank circuit 14 by +90 degrees, and then outputs the resulting phase-shifted signal to the phase comparator 16. Therefore, the phase frequency characteristics of the circuit including the tank circuit 14 and the 90-degree phase shifter 15 changes from zero degree to +180 degrees at the resonance frequency of the tank circuit 14.

On the other hand, the luminance signal outputted from the LPF 8 is inputted to the horizontal synchronizing signal separating circuit 31, and the horizontal synchronizing signal separating circuit 31 separates and extracts the horizontal synchronizing signal from the inputted luminance signal, and then, outputs the resulting the horizontal synchronizing signal to the monostable multivibrator 32. The monostable multivibrator 32 generates an H-level burst timing pulse having an interval substantially equal to a signal interval of the color burst signal of the chrominance sub-carrier signal included in the composite video signal inputted via the input terminal 1 in response to the inputted horizontal synchronizing signal, and then, outputs the generated H-level bust timing pulse to the phase comparator 16.

In the present preferred embodiment, the sub-carrier frequency of the down frequency-converted chrominance signal outputted from the LPF 5 becomes about 630 kHz either in the case where the sub-carrier frequency of the chrominance sub-carrier signal is about 3.58 MHz or in the case where the frequency is about 4.43 MHz. The phase comparator 16 executes a phase comparison process for a color burst signal interval represented by the burst timing pulse from the monostable multivibrator 32 so as to compare the output signal from the LPF 5 with the output signal obtained by making the output signal from the LPF 5 pass through the tank circuit 14 and the 90-degree phase shifter 15. Assuming now that the phase difference between the two input signals to the phase comparator 16 is θ, the phase error signal from the phase comparator 16 is expressed by cosθ.

When the sub-carrier frequency of the chrominance sub-carrier signal is about 3.58 MHz, the resonance frequency of the tank circuit 14 is 510 kHz. Therefore, the phase difference at the frequency of about 630 kHz that is the sub-carrier frequency of the down frequency-converted chrominance signal inputted to the phase comparator 16 becomes 180 degrees, and the phase error signal from the phase comparator 16 comes to have a negative polarity. On the other hand, when the sub-carrier frequency of the chrominance sub-carrier signal is about 4.43 MHz, the resonance frequency of the tank circuit 14 is 740 kHz. Therefore, the phase difference at the frequency of about 630 kHz that is the sub-carrier frequency of the down frequency-converted chrominance signal inputted to the phase comparator 16 becomes zero degree, and the phase error signal from the phase comparator 16 comes to have a positive polarity. The LPF 17 smooths the phase error signal from the phase comparator 16, and then, outputs the resulting smoothed signal to the system judgment circuit 18. The system judgment circuit 18 judges that the sub-carrier frequency of the chrominance sub-carrier signal is substantially 3.58 MHz when the output voltage of the output signal from the LPF 17 has the negative polarity, while the system judgment circuit 18 judges that the sub-carrier frequency of the chrominance sub-carrier signal is substantially 4.43 MHz when the output voltage of the output signal from the LPF 17 has the positive polarity.

In this case, the system judgment circuit 18 outputs the H-level control signal upon judging that the sub-carrier frequency is about 3.58 MHz, and controls the followings:
(a) to switch the trap frequency ft of the LPF 8 to 3.58 MHz;
(b) to switch the center frequency of the pass-band of the BPF 2 to 3.58 MHz;
(c) to switch the switch 21a of the VXO 21 to its a-side so as to connect the crystal resonator 22 having the oscillation frequency of 3.58 MHz to the VXO 21;
(d) to switch the oscillation center frequency of the VCO 13 to 16.84 MHz; and
(e) to set the resonance frequency of the tank circuit 14 to 510 kHz.

On the other hand, the system judgment circuit 18 outputs the L-level control signal upon judging that the sub-carrier frequency is about 4.43 MHz, and controls the followings:
(a) to switch the trap frequency ft of the LPF 8 to 4.43 MHz;
(b) to switch the center frequency of the pass-band of the BPF 2 to 4.43 MHz;
(c) to switch the switch 21a of the VXO 21 to its b-side so as to connect the crystal resonator 23 having the oscillation frequency of 4.43 MHz to the VXO 21;
(d) to switch the oscillation center frequency of the VCO 13 to 20.24 MHz; and
(e) to set the resonance frequency of the tank circuit 14 to 740 kHz.

Therefore, when the sub-carrier frequency of the chrominance sub-carrier signal included in the inputted composite video signal coincides with the result of judgment of the system judgment circuit 18, the result of judgment is maintained.

Next, the case where the sub-carrier frequency does not coincide with the result of judgment will be described hereinafter.

In the case where the sub-carrier frequency of the inputted chrominance sub-carrier signal is about 4.43 MHz when the sub-carrier frequency of the result of judgment of the system judgment circuit 18 is 3.58 MHz, the carrier wave frequency of the chrominance sub-carrier signal from the ACC 3 becomes about 4.43 MHz, and the frequency of the output signal from the 1/4 frequency divider 12 becomes about 4.21 MHz. Therefore, the frequencies of the output signal outputted from the BM 4 become about 220 kHz and about 8.64 MHz. In this case, the LPF 5 removes the frequency component of about 8.64 MHz in the higher frequency region, and the output signal obtained after the removal has only the frequency component of about 220 kHz. By this operation, the frequency component of the input signal to the phase comparator 16 becomes about 220 kHz. Meanwhile, since the resonance frequency of the tank circuit 14 is set to 510 kHz, the phase difference between the two input signals to the phase comparator 16 becomes zero degree, so that the phase error signal from the phase comparator 16 comes to have the positive polarity, and the output voltage of the output signal from the LPF 17 also comes to have the positive polarity. Consequently, the result of judgment of the system judgment circuit 18 shifts to 4.43 MHz, and then, the system judgment circuit 18 outputs the L-level control signal.

In the case where the sub-carrier frequency of the chrominance sub-carrier signal is about 3.58 MHz when the result of judgment of the system judgment circuit 18 represents 4.43 MHz, the frequency of the output signal from the ACC 3 becomes about 3.58 MHz, and the frequency of the output signal from the 1/4 frequency divider 12 becomes about 5.06 MHz. Therefore, the output signal from the BM 4 comes to have frequency components of about 1.48 MHz and about 8.64 MHz. In this stage, the LPF 5 removes the frequency component of about 8.64 MHz in the higher frequency region, and the output signal obtained after the filtering has only the frequency component of about 1.48 MHz. In this stage, the input signal from the LPF 5 to the phase comparator 16 has the frequency of about 1.48 MHz. Meanwhile, since the resonance frequency of the tank circuit 14 is set to 740 kHz, the phase difference between the two input signals to the phase comparator 16 becomes +180 degrees. Therefore, the phase error signal from the phase comparator 16 comes to have the negative polarity, and the output voltage of the output signal from the LPF 17 also comes to have the negative polarity. Consequently, the result of judgment of the system judgment circuit 18 shifts to 3.58 MHz. Therefore, it can be understood that, when the sub-carrier frequency of the chrominance sub-carrier signal included in the inputted composite video signal does not coincide with the result of judgment of the system judgment circuit 18, the result of judgment is immediately inverted. With this arrangement, the system judgment can be made even in the stage of turning on the power or in a similar stage. That is, the television system judgment circuit 50 of the present preferred embodiment can solve the first problem described in the section of the prior art.

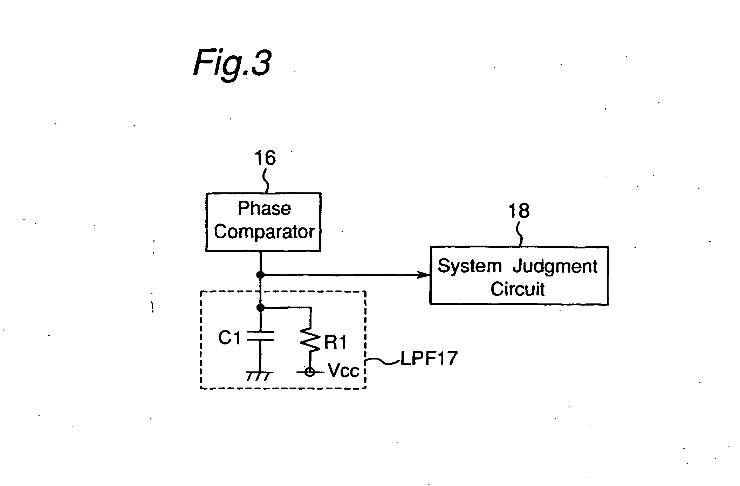

Further, a method for solving the second problem described in the section of the prior art will be described hereinafter. Fig. 3 shows a concrete circuit of the LPF 17.

Referring to Fig. 3, the LPF 17 is constructed of a circuit comprised of a parallel connection of a capacitor C1 and a resistor R1 for flowing a leak current therethrough. In this case, the leak current due to the resistor R1 is set to a value equal to or smaller than 1/100 of the average value of the output current from the phase comparator 16 so that the leak current does not influence the output error current of the phase comparator 16. The reason why the leak current is allowed to flow through the resistor R1 is as follows. When a monochrome signal is inputted as an input signal, no input signal to the phase comparator 16 exists, and there is no output signal from the phase comparator 16. In this stage, if the resistor R1 is not present, the output voltage of the LPF 17 becomes unstable and the result of judgment becomes indefinite or unstable, so that the output voltage from the phase comparator 16 comes to fluctuate between the positive polarity and the negative polarity about 0 V. In order to prevent this phenomenon, by pulling up the output voltage of the LPF 17 to, for example, the positive polarity by the resistor R1, the output voltage becomes stable on the positive polarity side. With this arrangement, the system judgment circuit 18 maintains the result of judgment that the sub-carrier frequency is 4.43 MHz when the monochrome signal is inputted. Therefore, the LPF 17 of the present preferred embodiment can solve the second problem described in the section of the prior art.

As described above, according to the present preferred embodiment, by virtue of the provision of the television system judgment circuit 50, it can be immediately judged whether the sub-carrier frequency of the chrominance sub-carrier signal included in the inputted composite video signal is substantially 3.58 MHz or 4.43 MHz. Furthermore, the LPF 17 is provided with the resistor R1 for flowing the leak current therethrough for the purpose of preventing the output error voltage from fluctuating when the output of the phase comparator 16 becomes unstable. Therefore, when a monochrome signal is inputted as an input signal, the sub-carrier frequency of the result of judgment of the system judgment circuit 18 can be fixed to 4.43 MHz.

In the above preferred embodiment, the phase comparator 16 executes the phase comparison process only in the interval represented by the burst timing pulse from the monostable multivibrator 32. However, the present invention is not limited to this, and the phase comparison process may be consistently or always executed.

According to the present preferred embodiment of the present invention, the time required for judging whether the sub-carrier frequency of the chrominance sub-carrier signal included in the inputted composite video signal is substantially 3.58 MHz or 4.43 MHz can be made shorter than that of the prior art, to allow the system judgment to be immediately made. Accordingly, the above-mentioned first problem can be solved.

According to the present preferred embodiment of the present invention, the aforementioned phase comparator executes the phase comparison process only in the interval of the color burst signal of the chrominance sub-carrier signal included in the inputted composite video signal, and the aforementioned judging means can correctly judge whether the sub-carrier frequency of the chrominance sub-carrier signal included in the inputted composite video signal is substantially 3.58 MHz or 4.43 MHz based on the signal obtained by low-pass-filtering the phase error signal that is the result of phase comparison.

Accordingly, the aforementioned second problem is solved, and there can be prevented the possible occurrence of the offense to the user's sensation due to such a phenomenon that a picture can be seen as if screens were switched over every two seconds when the recorded signal is reproduced.

Although the present invention has been fully described in connection with the preferred embodiments thereof with reference to the accompanying drawings, it is to be noted that various changes and modifications are apparent to those skilled in the art.

## Claims

1. A television system judgment apparatus comprising:
first low-pass filtering means (8) for low-pass filtering a luminance signal from an inputted composite video signal, and for outputting a resulting luminance signal;
modulating means (9,10) for frequency-modulating a predetermined carrier wave signal according to the luminance signal outputted from said first low-pass filtering means, and for outputting a frequency-modulated luminance signal obtained after the modulation;
band-pass filtering means (2) for band-pass-filtering a chrominance sub-carrier signal from said inputted composite video signal, and outputting a resulting chrominance sub-carrier signal;
frequency converting means (4,5) for frequency-converting the chrominance sub-carrier signal outputted from said band-pass filtering means into a down frequency-converted chrominance signal having a predetermined sub-carrier frequency, and for outputting a resulting down frequency- converted chrominance signal;
recording means (7,41,42) for recording a recording signal including the frequency-modulated luminance signal outputted from said modulating means and the down frequency-converted chrominance signal outputted from said frequency converting means (4,5);
means (19-27) for judging whether or not the chrominance sub-carrier signal outputted from said band pass filtering means is in a killed state, and switch means (6) for controlling the down frequency-converted chrominance signal not to be outputted from said frequency converting means to said recording means when it is judged that the chrominance sub-carrier signal outputted from said band-pass filtering means is in the killed state,
wherein said television system judgment apparatus is provided in a recording circuit of a video tape recorder for recording said recording signal,
**characterized in that** said television system judgment apparatus further comprises:
a tank circuit (14) receiving at an input thereof the signal outputted from said frequency converting means (4,5) and comprising a resonance circuit having a resonance frequency which is set by selectively switching over between a first resonance frequency higher than the sub-carrier frequency of said down frequency-converted chrominance signal and a second resonance frequency lower than the sub-carrier frequency of said down frequency-converted chrominance signal;
phase shifting means (15) for shifting the phase of a signal outputted from said tank circuit by 90 degrees, and for outputting a resulting phase-shifted signal;
a phase comparator (16) for comparing the phase of the down frequency-converted chrominance signal outputted from said frequency converting means with the phase of the signal outputted from said phase shifting means, and for outputting a resulting phase error signal;
second low-pass filtering means (17) for smoothing the phase error signal outputted from said phase comparator through low-pass filtering, and for outputting a resulting smoothed signal; and
system judging means (18) for judging whether the sub-carrier frequency of the chrominance sub-carrier signal included in said inputted composite video signal is substantially equal to 3.58 MHz or 4.43 MHz based on the smoothed signal outputted from said second low-pass filtering means.

2. The television system judgment apparatus as claimed in Claim 1, further comprising:
signal separating means (31) for separating and extracting a horizontal synchronizing signal from the luminance signal outputted from said first low-pass filtering means; and
signal generating means (32) for generating a pulse signal representing an interval of a color burst signal of the chrominance sub-carrier signal included in said inputted composite video signal based on the horizontal synchronizing signal separated by said signal separating means, and for outputting a resulting pulse signal to said phase comparator (16),
wherein said phase comparator (16) executes the phase comparison only for an interval represented by said pulse signal.

3. The television system judgment apparatus as claimed in Claim 1 or 2,
wherein said second low-pass filtering means (17) comprises :
a resistor (R1) arranged to let a leak current flow therethrough so that the polarity of the signal outputted from said second low-pass filtering means (17) is maintained at a predetermined polarity when no chrominance sub-carrier signal is included in the chrominance sub-carrier signal outputted from said band-pass filtering means (2).

## Patentansprüche

1. Fernsehsystem-Beurteilungsvorrichtung umfassend:
erstes Tiefpassfilter-Mittel (8) zum Tiefpass-Filtern eines Helligkeitssignals aus einem eingegebenen zusammengesetzten Video-Signal und zum Ausgeben eines resultierenden Helligkeitssignals;
Modulationsmittel (9, 10) zur Frequenzmodulation eines vorbestimmten Trägerwellen-Signals gemäß dem von dem ersten Tiefpassfilter-Mittel ausgegebenen Helligkeitssignal und zum Ausgeben eines nach der Modulation erhaltenen frequenzmodulierten Helligkeitssignals;
Bandpassfilter-Mittel (2) zum Bandpass-Filtern eines Chrominanz-Subträger-Signals aus dem eingegebenen Zusammengesetzten Video-Signal und Ausgeben eines resultierenden Chrominanz-Subträger-Signals;
Frequenzwandler-Mittel (4, 5) zum Frequenz-Wandeln des von dem Bandpassfilter-Mittel ausgegebenen Chrominanz-Subträger-Signals in ein niederfrequenz-gewandeltes Chrominanz-Signal, das eine vorbestimmte Subträger-Frequenz aufweist, und zum Ausgeben eines resultierenden niederfrequenz-gewandelten Chrominanz-Signals;
Aufzeichnungsmittel (7, 41, 42) zum Aufzeichnen eines Aufzeichnungssignals, das das von dem Modulationsmittel ausgegebene frequenzmodulierte Helligkeitssignal und das von dem Frequenzwandler-Mittel (4, 5) ausgegebene niederfrequenz-gewandelte Chrominanz-Signal umfasst;
Mittel (19, 27) zur Beurteilung, ob das von dem Bandpassfilter-Mittel ausgegebene Chrominanz-Subträger-Signal in einem begrenzten (killed) Zustand ist oder nicht und Schaltmittel (6) zum Steuern des niederfrequenz-gewandelten Chrominanz-Signals, das nicht von dem Frequenzwandler-Mittel an das Aufzeichnungsmittel auszugeben ist, wenn beurteilt wird, dass das von dem Bandpassfilter-Mittel ausgegebene Chrominanz-Subträger-Signal in dem begrenzten (killed) Zustand ist,
wobei die Fernsehsystem-Beurteilungsvorrichtung in einem Aufzeichnungsschaltkreis eines Videobandrecorders zum Aufzeichnen des Aufzeichnungssignals vorgesehen ist,
**dadurch gekennzeichnet, dass** die Fernsehsystem-Beurteilungsvorrichtung ferner umfasst:
einen Schwingkreis (14), der an einem seiner Eingänge das von dem Frequenzwandler-Mittel (4, 5) ausgegebene Signal empfängt und einen Resonanzschaltkreis mit einer Resonanzfrequenz umfasst, welche durch wahlweises Umschalten zwischen einer ersten Resonanzfrequenz, die höher als die Subträger-Frequenz des niederfrequenz-gewandelten Chrominanz-Signals ist, und einer zweiten Resonanzfrequenz, die niedriger als die Subträger-Frequenz des niederfrequenz-gewandelten Chrominanz-Signals ist, bestimmt wird;
Phasenverschiebungsmittel (15) zum Verschieben der Phase eines von dem Schwingkreis ausgegebenen Signals um 90° und zum Ausgeben eines resultierenden phasenverschobenen Signals;
einen Phasenvergleicher (16) zum Vergleichen der Phase des niederfrequenz-gewandelten Chrominanz-Signals, das von dem Frequenzwandlermittel ausgegeben wurde, mit der Phase des Signals, das von dem Phasenverschiebungsmittel ausgegeben wurde, und zum Ausgeben eines resultierenden Phasenabweichungssignals;
zweite Tiefpassfilter-Mittel (17) zum Glätten des von dem Phasenvergleicher ausgegebenen Phasenabweichungssignals durch Tiefpass-Filtern und zum Ausgeben eines resultierenden geglätteten Signals; und
Systembeurteilungsmittel (18) zum Beurteilen, ob die Subträger-Frequenz des Chrominanz-Subträger-Signals, das in dem eingegebenen Zusammengesetzten Video-Signal umfasst ist, im Wesentlichen gleich 3,58 MHz oder 4,43 MHz ist, basierend auf dem von dem zweiten Tiefpassfilter-Mittel ausgegebenen geglätteten Signal.

2. Fernsehsystem-Beurteilungsvorrichtung nach Anspruch 1, ferner umfassend:
Signaltrennmittel (31) zum Trennen und Extrahieren eines horizontal synchronisierenden Signals aus dem von dem ersten Tiefpassfilter-Mittel ausgegebenen Helligkeitssignal; und
Signalerzeugungsmittel (32) zum Erzeugen eines Impulssignals, das ein Intervall eines Farberkennungssignals des Chrominanz-Subträger-Signals darstellt, das in dem eingegebenen Zusammengesetzten Video-Signal umfasst ist, basierend auf dem durch das Signaltrennmittel getrennten horizontal synchronisierenden Signal, und zum Ausgeben eines resultierenden Impulssignals an den Phasenvergleicher (16),
worin der Phasenvergleicher (16) den Phasenvergleich nur für ein durch das Impulssignal dargestelltes Intervall ausführt.

3. Fernsehsystem-Beurteilungsvorrichtung nach Anspruch 1 oder 2,
worin das zweite Tiefpassfilter-Mittel (17) umfasst:
einen Wiederstand (R1) angeordnet, um einen Kriechstrom durchfließen zu lassen, so dass die Polarität des von dem zweiten Tiefpassfilter-Mittel (17) ausgegebenen Signals bei einer bestimmten Polarität beibehalten wird, wenn kein Chrominanz-Subträger-Signal in dem von dem Bandpassfilter-Mittel (2) ausgegebenen Chrominanz-Subträger-Signal umfasst ist.

## Revendications

1. Appareil de jugement de système de télévision comprenant :
un premier moyen de filtrage passe-bas (8) pour filtrer passe-bas un signal de luminance depuis un signal vidéo composite entré pour sortir un signal de luminance résultant ;
un moyen de modulation (9, 10) pour moduler en fréquence un signal d'onde porteuse prédéterminé en conformité avec le signal de luminance sorti dudit premier moyen de filtrage passe-bas, et pour sortir un signal de luminance modulé en fréquence obtenu après la modulation ;
un moyen de filtrage passe-bande (2) pour filtrer passe-bande un signal de sous-porteuse de chrominance depuis ledit signal vidéo composite entré et pour sortir un signal de sous-porteuse de chrominance résultant ;
un moyen de conversion de fréquence (4, 5) pour convertir en fréquence le signal de sous-porteuse de chrominance sorti dudit moyen de filtrage passe-bande en un signal de chrominance à fréquence abaissée ayant une fréquence de sous-porteuse prédéterminée et pour sortir un signal de chrominance à fréquence abaissée résultant ;
un moyen d'enregistrement (7, 41, 42) pour enregistrer un signal d'enregistrement incluant le signal de luminance modulé en fréquence sorti dudit moyen de modulation et le signal de chrominance à fréquence abaissée sorti dudit moyen de conversion de fréquence (4, 5) ;
un moyen (19 à 27) pour juger si oui ou non le signal de sous-porteuse de chrominance sorti dudit moyen de filtrage passe-bande est dans un état supprimé, et un moyen d'interrupteur (6) pour commander le signal de chrominance abaissé en fréquence qui ne doit pas être sorti dudit moyen de conversion de fréquence vers ledit moyen d'enregistrement lorsqu'il est jugé que le signal de sous-porteuse de chrominance sorti dudit moyen de filtrage passe-bande est dans l'état supprimé,
dans lequel ledit appareil de jugement de système de télévision est disposé dans un circuit d'enregistrement d'un magnétoscope pour l'enregistrement dudit signal d'enregistrement,
**caractérisé en ce que** ledit appareil de jugement de système de télévision comprend en outre :
un circuit bouchon (14) recevant au niveau de son entrée le signal sorti dudit moyen de conversion de fréquence (4, 5) et comprenant un circuit résonant ayant une fréquence de résonance qui est établie en commutant sélectivement entre une première fréquence de résonance plus élevée que la fréquence de sous-porteuse dudit signal de chrominance à fréquence abaissée et une seconde fréquence de résonance inférieure à la fréquence de sous-porteuse dudit signal de chrominance à fréquence abaissée ;
un moyen de déphasage (15) pour déphaser la phase d'un signal sorti dudit circuit de bouchon de 90 degrés, et pour sortir un signal déphasé résultant ;
un comparateur de phase (16) pour comparer la phase du signal de chrominance abaissé en fréquence sorti dudit moyen de conversion de fréquence à la phase du signal sorti dudit moyen de déphasage et pour sortir un signal d'erreur de phase résultant ;
un second moyen de filtrage passe-bas (17) pour lisser le signal d'erreur de phase sorti dudit comparateur de phase par l'intermédiaire du filtrage passe-bas et pour sortir un signal lissé résultant ; et
un moyen de jugement de système (18) pour juger si la fréquence de sous-porteuse du signal de sous-porteuse de chrominance inclus dans le signal vidéo composite entré est sensiblement égale à 3,58 MHz ou à 4,43 MHz sur la base du signal lissé sorti dudit second moyen de filtrage passe-bas.

2. Appareil de jugement de système de télévision selon la revendication 1, comprenant en outre :
un moyen de séparation de signal (31) pour séparer et extraire un signal de synchronisation horizontal du signal de luminance sorti dudit premier moyen de filtrage passe-bas ; et
un moyen de génération de signal (32) pour générer un signal impulsionnel représentant un intervalle d'un signal de rafale couleur du signal de sous-porteuse de chrominance inclus dans ledit signal vidéo composite entré sur la base du signal de synchronisation horizontal séparé par ledit moyen de séparation de signal, et pour sortir un signal impulsionnel résultant vers ledit comparateur de phase (16),
dans lequel ledit comparateur de phase (16) n'exécute la comparaison de phase que pendant un intervalle représenté par ledit signal impulsionnel.

3. Appareil de jugement de système de télévision selon la revendication 1 ou 2,
dans lequel ledit second moyen de filtrage passe-bas (17) comprend :
une résistance (R1) conçue pour laisser circuler un courant de fuite à travers celle-ci de sorte que la polarité du signal sorti dudit second moyen de filtrage passe-bas (17) est maintenue à une polarité prédéterminée lorsqu'aucun signal de sous-porteuse de chrominance n'est inclus dans le signal de sous-porteuse de chrominance sorti dudit moyen de filtrage passe-bande (2).
